# EUROPÄISCHE PATENTSCHRIFT

(11) **EP 1 373 999 B1**
(45) Veröffentlichungstag und Bekanntmachung des Hinweises auf die Patenterteilung: **14.09.2005**
(21) Anmeldenummer: 02712936.0
(22) Anmeldetag: 05.03.2002
(51) Int. Cl.: G05B 23/02

(54) **VERFAHREN ZUM REGELN VON PROZESSPARAMETERN ZUR ERZIELUNG KONSTANTER PROZESSBEDINGUNGEN**
METHOD FOR CONTROLLING PROCESS PARAMETERS TO ACHIEVE CONSTANT PROCESS CONDITIONS
PROCEDE DE REGULATION DE PARAMETRES DE PROCESSUS POUR L'OBTENTION DE CONDITIONS DE PROCESSUS CONSTANTES

(30) Priorität: 14.03.2001 DE 10112125
(43) Veröffentlichungstag der Anmeldung: 02.01.2004
(73) Patentinhaber: Priamus System Technologies AG, 8200 Schaffhausen (CH)
(72) Erfinder: FREY, Jürgen Dipl.Ing, 73230 Kirchheim/Teck (DE)
(74) Vertreter: Weiss, Peter
(86) Internationale Anmeldenummer: PCT/EP2002/002361
(87) Internationale Veröffentlichungsnummer: WO 2002/073328

(56) Entgegenhaltungen:
- WO-A-00/58797
- DE-A- 19 805 061

## Beschreibung

Die Erfindung betrifft ein Verfahren zum Regeln von Prozessparametern zur Erzielung konstanter Prozessbedingungen.

Bei herkömmlichen Regelverfahren zum Erreichen konstanter Prozessbedingungen werden üblicherweise aktuelle Messdaten mit Referenzdaten zeitlich verglichen. Als nächster Verfahrensschritt wird versucht, die aktuellen Messdaten durch Regeln der Prozessparameter mit den Referenzdaten in Übereinstimmung zu bringen. Dieses Verfahren hat den wesentlichen Nachteil, dass auch bei Verwendung von künstlicher Intelligenz ein grosses Maß an Prozesswissen vorhanden sein muss, um eine zuverlässige Lösung zu realisieren.

Der vorliegenden Erfindung liegt die Aufgabe zugrunde, das oben genannte Verfahren wesentlich zu vereinfachen und aus diesem Grunde für den Anwender handhabbarer zu machen, so dass das Verfahren auch von weniger geschultem Personal durchführbar ist.

Zur Lösung dieser Aufgabe führt, dass die aktuellen Daten und Referenzdaten zeitunabhängig betrachtet und übereinander aufgetragen werden, so dass sich bei optimaler Übereinstimmung eine 45°-Gerade ergibt bzw. bei Nichtübereinstimmung durch Veränderung der Parameter eine 45°-Gerade angestrebt wird.

Dieser völlig neue und vereinfachende Ansatz besteht vor allem in einer zeitunabhängigen Betrachtung von aktuellen Daten und Referenzdaten. Werden die entsprechenden Daten eines bestimmten Prozessparameters übereinander aufgetragen und eine gleiche Beabstandung bei der X- wie auch bei der Y-Achse gewählt, so ergibt sich bei optimaler Übereinstimmung eine 45°-Gerade. Weicht der aktuelle Verlauf der Messdaten vom Referenzverlauf ab, so ist dies in dieser Darstellung deutlich zu erkennen und ohne weiteres Prozesswissen aufzuregeln.

Dabei ist unerheblich, ob ein vollständiger Kurvenverlauf oder nur ein Teilbereich betrachtet wird. Für den Anwender genügt es, wenn dieser Kurvenverlauf beispielsweise auf einem Display dargestellt wird. Er erkennt sofort die Abweichung und kann einen entsprechenden Regelvorgang einleiten.

Das erfindungsgemässe Verfahren ist generell für sämtliche Verarbeitungsverfahren anwendbar, bei denen konstante physikalische Bedingungen beibehalten werden müssen. Nur als Beispiel wird auf das Spritzgiess-/ Druckgiessverfahren verwiesen. In einem Mehrfachwerkzeug ist es wünschenswert, dass der Füllvorgang von Kunststoff-, Keramik- oder Metallschmelze ausbalanciert wird. In diesem Fall kann beispielsweise der Druck- oder Temperaturverlauf im Kanal oder in der Kavität vom Anstieg bis zum Maximalwert übereinander aufgetragen und miteinander verglichen werden. Bei Abweichen der Kurve in der X-Y-Darstellung von dem idealen 45°-Verlauf werden z.B. mit Hilfe eines Fuzzy-Reglers oder mit einem neuronalen Netzwerk, die Prozessbedingungen so lange verändert, bis der Idealverlauf hergestellt ist. Dies ist aber nur ein Ausführungsbeispiel. Es sind unzählige weitere denkbar, die jedoch hier nicht erwähnt werden sollen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in den
Figuren 1a und b Diagramme von Druckkurven beim Füllvorgang einer Kavität eines Spritzgiesswerkzeuges;
Figuren 2a und b Diagramme von Druckkurven eines weiteren Füllvorganges einer Kavität eines Spritzgiesswerkzeuges;
Figuren 3a und b Diagramme von Druckkurven während der Erstarrungsphase nach dem Füllvorgang einer Kavität eines Spritzgiesswerkzeuges;
Figuren 4a und b Diagramme von Temperaturverläufen.

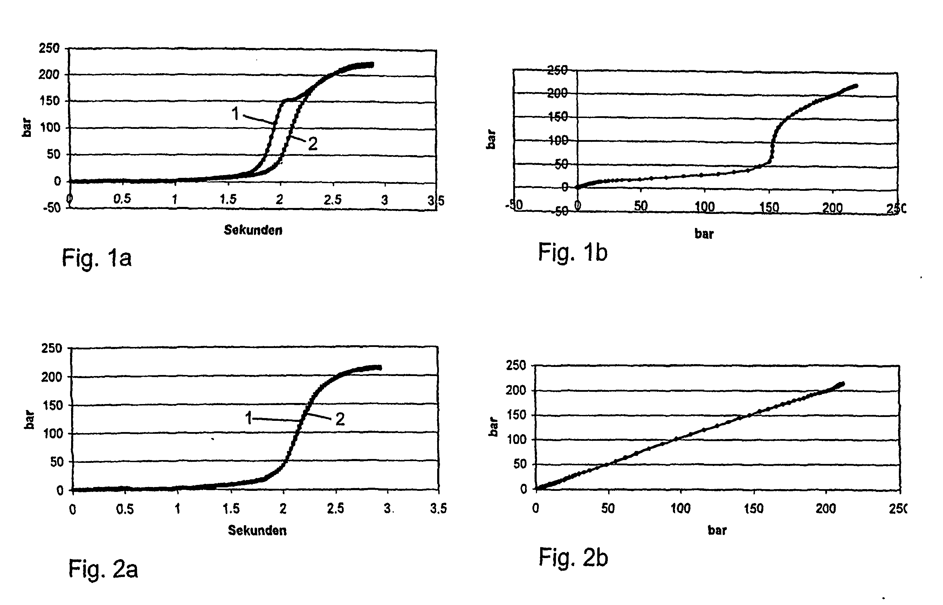

Gemäss Figur 1a ist der Druckanstieg beim Füllen von zwei Kavitäten in deren Kanal 1 bzw. Kanal 2 dargestellt. Die Darstellung erfolgt durch Druck (bar) über Zeit (Sekunden). Erkennbar ist, dass der Druck etwa nach einer Sekunde beginnt und beim Kanal 2 etwa nach zwei Sekunden erheblich ansteigt, wobei nach drei Sekunden etwa das Maximum erreicht ist. Der Verlauf des Druckanstiegs in Kanal 2 wird als Referenzdruckkurve genommen. Selbstverständlich könnte auch der Verlauf des Druckanstieges in Kanal 1 als Referenzkurve genommen werden.

Der Druckverlauf in Kanal 1 weicht im Bereich zwischen 1,8 Sekunden und 2,4 Sekunden von dem Druckverlauf in Kanal 2 ab. Wird nun der Druckverlauf in Kanal 1 über demjenigen in Kanal 2, wie in Figur 1b gezeigt, dargestellt, so ergibt sich eine geschwungene Kurve, die von einer angestrebten Geraden abweicht.

Angestrebt wird ein balancierter Druckverlauf in Kanal 1 und Kanal 2, wie dies in Figur 2a dargestellt ist. Werden hier die Druckverläufe übereinander, wie in Figur 2b gezeigt, dargestellt, so ergibt sich eine Gerade, die, wenn die Beabstandung der X-Achse gleich derjenigen der Y-Achse wäre, eine 45°-Gerade darstellen würde.

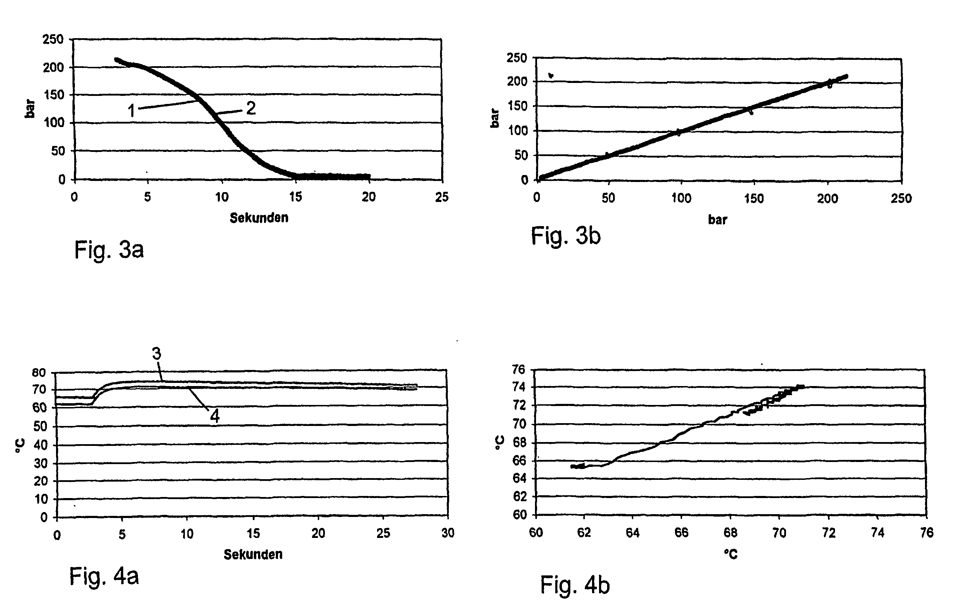

Ähnlich kann auch der Druckabfall gemäss den Figuren 3a und 3b dargestellt werden. In Figur 3a wird gezeigt, dass der Druckabfall in beiden Kanälen 1 und 2 übereinstimmt, d.h. er ist in diesem Mehrfachwerkzeug ausbalanciert. Auch hier ergibt sich gemäss Figur 3b eine Gerade, bei Wahl einer Gleichbeabstandung der Parameterdarstellung eine 45°-Gerade.

Auf diese erfindungsgemässe Art und Weise kann ein beliebiger Prozessparameter dargestellt werden. Beispielsweise wird in Figur 4a der Temperaturverlauf aktuell als Kurve 3 über einer Referenzkurve 4 dargestellt. Wird dieser Temperaturverlauf, wie in Figur 4b gezeigt, übereinander dargestellt, so sind die Abweichungen deutlich ersichtlich. Wird angestrebt, dass der aktuelle Temperaturverlauf demjenigen der Referenzkurve 4 entspricht, so ergibt dies wiederum in der Darstellung gemäss Figur 4b eine Gerade, bei gleicher Beabstandung eine 45°-Gerade.

### Positionszahlenliste

| | | | | | |
|---|---|---|---|---|---|
| 1 | Kanal | 34 | | 67 | |
| 2 | Kanal | 35 | | 68 | |
| 3 | Kurve | 36 | | 69 | |
| 4 | Kurve | 37 | | 70 | |
| 5 | | 38 | | 71 | |
| 6 | | 39 | | 72 | |
| 7 | | 40 | | 73 | |
| 8 | | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Regeln von Prozessparametern zur Erzielung konstanter Prozessbedingungen beim Füllvorgang von Kavitäten eines Spritzgiesswerkzeuges, wobei der Ist-Verlauf des Parameters einer Kavität als Referenz genommen und ihm der Ist-Verlauf zumindest einer weiteren Kavität gegenübergestellt wird, so dass sich bei optimaler Übereinstimmung eine 45°-Gerade ergibt bzw. bei Nichtübereinstimmung durch Veränderung des Parameters der weiteren Kavität eine 45°-Gerade angestrebt wird.

2. Verfahren nach Anspruch 1, **dadurch gekennzeichnet, dass** die aktuellen Daten und Referenzdaten übereinander auf einem Display dargestellt werden.

## Claims

1. Method for controlling process parameters in order to obtain constant process conditions, in the operation of filling cavities in an injection mould, the actual profile of the parameter of a cavity being taken as reference and the actual profile of at least one further cavity being compared with it, so that optimum correspondence results in a 45° straight line or in the event of a lack of correspondence it is aimed to achieve a 45° straight line by changing the parameters of the further cavity.

2. Method according to Claim 1, **characterized in that** the current data and reference data are presented against one another on a display.

## Revendications

1. Procédé de régulation de paramètres de procédé pour l'obtention de conditions de procédé constantes lors de l'opération de remplissage de cavités d'un moule de moulage par injection, l'évolution de consigne du paramètre d'une cavité étant prise comme référence et l'évolution de consigne d'au moins une autre cavité lui étant opposée, de sorte qu'il s'ensuive, en cas de coïncidence optimale, une droite de 45° ou qu'il soit recherché, en cas de non coïncidence, par la modification du paramètre de l'autre cavité, une droite de 45°.

2. Procédé selon la revendication 1, **caractérisé par le fait que** les données actuelles et les données de référence sont représentées superposées sur un écran de visualisation.
